# EUROPEAN PATENT APPLICATION

(11) **EP 2 120 404 A1**
(43) Date of publication of application: **18.11.2009**
(21) Application number: 07850353.9
(22) Date of filing: 10.12.2007
(51) Int. Cl.: H04L 12/56, G06F 21/20

(54) **COMMUNICATION TERMINAL, TERMINAL, COMMUNICATION SYSTEM, COMMUNICATION METHOD, AND PROGRAM**

(30) Priority: 20.12.2006 JP 2006342284
(71) Applicant: NEC Corporation, Minato-ku Tokyo 108-8001 (JP)
(72) Inventor: ASAKURA, Yoshiharu, Tokyo 108-8001 (JP)
(74) Representative: Glawe, Delfs, Moll
(86) International application number: PCT/JP2007/073785
(87) International publication number: WO 2008/075580

(57) **Abstract**

A communication source application is specified in TCP/IP stream communication. The communication source terminal 10 which communicates with the communication destination terminal 20 transmits information (a communication source IP address and a communication source port number) of the communication source terminal 10 related to communication with the communication destination terminal 20 to the communication destination terminal 20 through the general-purpose communication path 60 and transmits the information of the communication source terminal 10 related to the communication and information of the communication source application which is executing communication on the communication source terminal 10 to the communication destination terminal 20 through the dedicated communication path 30 whose safety is high other than the general-purpose communication path 60.

## Description

### TECHNICAL FIELD

The present invention relates to a communication terminal, a terminal, a communication system, a communication method and a program for TCP/IP stream communication.

### BACKGROUND ART

As related art, there exists the IDENT (Identification Protocol) protocol as disclosed in RFC (Request For Comments) 1413 (Non-Patent Literature 1) in IETF (Internet Engineering Task Force). In the IDENT protocol, information about a user which activates a connection source application can be obtained by a connection destination application, for example, in electronic mail transmission, by first connecting to a server by a client and then re-connecting to the client by the server to confirm who the client is.

One example of related art electronic mailing systems is disclosed in Japanese Patent Laying-Open No. 2006-287976 (Patent Literature 1). Patent Literature 1 discloses that even when a mail client fails to have an electronic mail enciphering function, provision of a signature sensing unit for sensing whether received electronic mail has electronic signature or not in a mail server which receives and accumulates electronic mail directed to a destination to be managed and transmits electronic mail to a mail client as required enables electronic mail to be enciphered and transmitted to a desired destination, while enabling encryption and transmission of electric mail to be flexibly coped with based on a result of acquisition of a public key or a notification of a validity verification result of a public key from the mail server.
Patent Literature 1: Japanese Patent Laying-Open No. 2006-287976.
Non-Patent Literature 1: RFC1413.

Related art, however, has the following problems.

First problem is that information about an application of a connection source can not be obtained.

The reason is that since information obtained from communication by each of all the applications activated by the same user is all the same, only the information about a user who activates a connection source application can be obtained in the IDENT protocol.

Second problem is that since properness of information about a user who activates a connection source application can not be guaranteed in the IDENT protocol, it is impossible to detect user information being altered halfway on a communication path.

The reason is that because the IDENT protocol uses a communication path for communication between applications without modification, safety of the communication path is not ensured.

Third problem is that since communication between applications needs to be adaptable to the IDENT protocol, when operating an existing application not adaptable to the IDENT protocol, a communication protocol should be adapted to the IDENT protocol by modification.

The reason is that since unless the communication takes the IDENT protocol into consideration, it is impossible to use the IDENT protocol.

### (THE OBJECT OF THE INVENTION)

An object of the present invention is to provide a communication terminal, a terminal, a communication system, a communication method and a program for specifying a communication source application in TCP/IP stream communication.

### SUMMARY

According to a first exemplary aspect of the invention, a communication terminal which communicates with other communication terminal through a network, includes
a communication unit for transmitting information related to the communication with the other communication terminal of a communication destination to the other communication terminal, and
an information transmission unit for transmitting, to the other communication terminal through a dedicated communication path whose safety is high other than a communication path through which the communication unit communicates, information related to the communication and information about an application of a communication source which is executing the communication.

According to a second exemplary aspect of the invention, a communication terminal which communicates with other communication terminal through a network, includes
a communication unit for transmitting information related to communication to the other communication terminal of a communication destination or receiving information related to communication from the other communication terminal of a communication source,
an information transmission unit for transmitting, to the other communication terminal of the communication destination through a dedicated communication path whose safety is high other than a communication path through which the communication unit communicates, information related to the communication and information about an application of a communication source which is executing the communication,
an information reception unit for receiving, from the other communication terminal of the communication source through the dedicated communication path, information about the communication and information about the application of the communication source which is executing the communication,
a recording unit for recording the information related to the communication and the information about the application which are received by the information reception unit so as to be correlated with each other, and
an inquiry unit for obtaining, from the recording unit, the information about the application corresponding to the information related to the communication which is received by the communication unit.

According to a third exemplary aspect of the invention, a communication system having a communication terminal which communicates with other communication terminal through a network, wherein the communication terminal includes
a communication unit for transmitting information related to communication to the other communication terminal of a communication destination or receiving information related to communication from the other communication terminal of a communication source,
an information transmission unit for transmitting, to the other communication terminal of the communication destination through a dedicated communication path whose safety is high other than a communication path through which the communication unit communicates, information related to the communication and information about an application of a communication source which is executing the communication,
an information reception unit for receiving, from the other communication terminal of the communication source through the dedicated communication path, information related to the communication and information about the application of the communication source which is executing the communication,
a recording unit for recording the information related to the communication and the information about the application which are received by the information reception unit so as to be correlated with each other, and
an inquiry unit for obtaining, from the recording unit, the information about the application corresponding to the information related to the communication which is received by the communication unit, wherein
the communication terminal is connected to the other communication terminal through the dedicated communication path.

According to a fourth exemplary aspect of the invention, a communication method in a communication system having a communication terminal which communicates with other communication terminal through a network, wherein the communication terminal includes
a communication step of transmitting information related to the communication with the other communication terminal of a communication destination to the other communication terminal, and
an information transmission step of transmitting, to the other communication terminal through a dedicated communication path whose safety is high other than a communication path used at the communication step, information related to the communication and information about an application of a communication source which is executing the communication.

According to a fifth exemplary aspect of the invention, a communication method in a communication system having a communication terminal which communicates with other communication terminal through a network, wherein the communication terminal includes
a communication step of receiving information related to communication from the other communication terminal of a communication source,
an information reception step of receiving, through the dedicated communication path, information related to the communication and information about an application of the communication source which executes the communication,
a recording step of recording, in a recording unit, the information related to the communication and the information about the application which are received at the information reception step so as to be correlated with each other, and
an inquiry step of obtaining, from the recording unit, the information about the application corresponding to the information related to the communication which is received at the communication step.

According to a sixth exemplary aspect of the invention, a program realized by a communication terminal which communicates with other communication terminal through a network, which causes the communication terminal to execute
a communication processing of transmitting information related to the communication with the other communication terminal of a communication destination to the other communication terminal, and
an information transmission processing of transmitting, to the other communication terminal through a dedicated communication path whose safety is high other than a communication path used in the communication processing, information related to the communication and information about an application of a communication source which is executing the communication.

According to a seventh exemplary aspect of the invention, a program realized by a communication terminal which communicates with other communication terminal through a network, which causes the communication terminal to execute
a communication processing of receiving information related to communication from the other communication terminal of a communication source,
an information reception processing of receiving, through the dedicated communication path, information related to the communication and information about an application of the communication source which executes the communication,
a recording processing of recording, in a recording unit, the information related to the communication and the information about the application which are received in the information reception processing so as to be correlated with each other, and
an inquiry processing of obtaining, from the recording unit, the information about the application corresponding to the information related to the communication which is received in the communication processing.

First effect of the present invention is to obtain proper information about a communication source application.

Second effect of the present invention is that no information about a communication source application is altered.

Third effect of the present invention is that no modification is required of TCP/IP stream communication executed between a communication source application and a communication destination application and of a protocol between applications.

### BRIEF DESCRIPTION OF THE DRAWINGS

Fig. 1 is a block diagram showing a structure of an application specifying system according to a first exemplary embodiment of the present invention;
Fig. 2 is a diagram for use in explaining identifier correspondence information in the first exemplary embodiment;
Fig. 3 is a block diagram showing a hardware structure of a communication source terminal of the application specifying system according to the first exemplary embodiment;
Fig. 4 is a flow chart showing operation of a communication source application 40, a communication sensing device 110, an information obtaining device 120 and an information transmission device 130 according to the first exemplary embodiment;
Fig. 5 is a flow chart showing operation of an information reception device 210 according to the first exemplary embodiment;
Fig. 6 is a flow chart showing operation of a communication destination application 50 and an inquiry device 230 according to the first exemplary embodiment;
Fig. 7 is a block diagram showing a structure of an application specifying system according to a second exemplary embodiment of the present invention; and
Fig. 8 is a block diagram showing a structure of an application specifying system according to a third exemplary embodiment of the present invention.

### EXEMPLARY EMBODIMENT

### (FIRST EXEMPLARY EMBODIMENT)

An application specifying system according to a first exemplary embodiment of the present invention will be described in detail with reference to the drawings.

### (STRUCTURE OF THE FIRST EXEMPLARY EMBODIMENT)

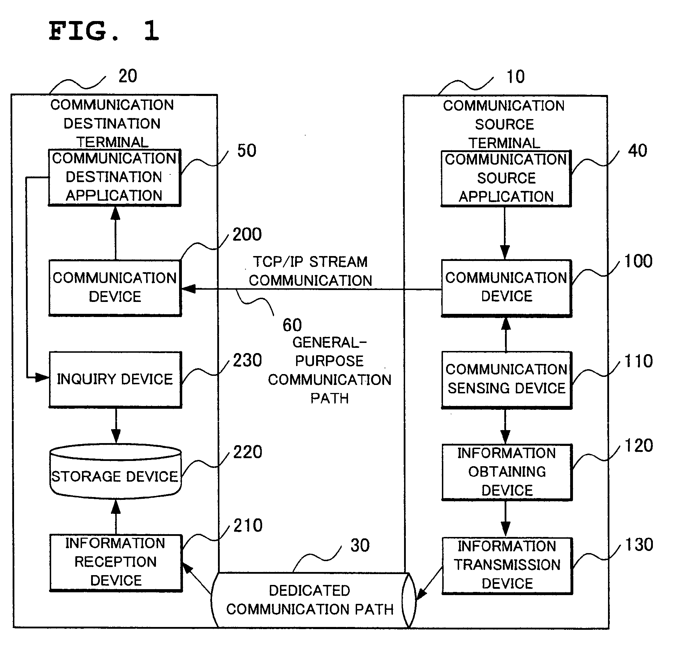

Fig. 1 is a block diagram showing a structure of an application specifying system according to the first exemplary embodiment of the present invention.

With reference to Fig. 1, the application specifying system according to the present exemplary embodiment comprises a communication source terminal 10 having a communication source application 40, a communication destination terminal 20 having a communication destination application 50, a dedicated communication path 30, and a general-purpose communication path 60 as a common communication path.

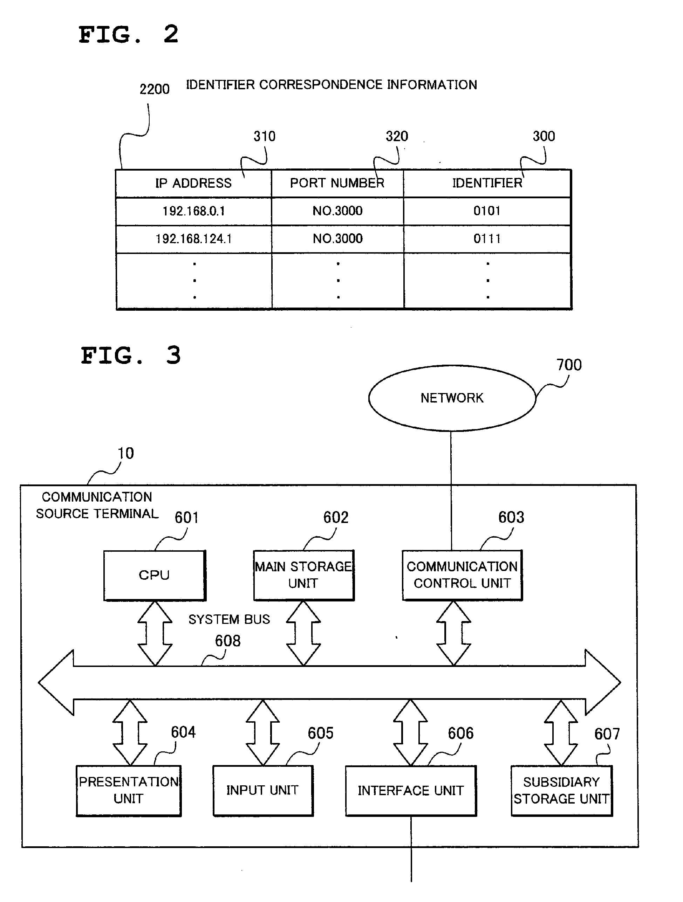

The communication source application 40 is an application operable on the communication source terminal 10. To the communication source application 40, an identifier 300 (see Fig. 2) is assigned as an identifier for identifying the communication source application 40.

The communication destination application 50 is an application operable on the communication destination terminal 20.

The communication source terminal 10 is a terminal including a communication device 100, a communication sensing device 110, an information obtaining device 120 and an information transmission device 130. In addition, to the communication terminal 10, an IP address 310 (see Fig. 2) is assigned as a communication source IP address.

The communication device 100 has a function of executing TCP/IP stream communication by using the general-purpose communication path 60 and a function of assigning a port number 320 (not shown) as a communication source port number at the time of executing connection for the TCP/IP stream communication.

The communication sensing device 110 has a function of monitoring the communication device 100 to sense execution of connection for the TCP/IP stream communication using the general-purpose communication path 60. In the present invention, sensing of the execution of connection for the TCP/IP stream communication is made by the communication sensing device 110 of the communication source terminal 10, which requires use of none of functions on the network and functions of the communication destination terminal 20 which will be described later.

The information obtaining device 120 has a function of obtaining the identifier 300 of the communication source application 40 which is executing connection for the TCP/IP stream communication sensed by the communication sensing device 110, the IP address 310 which is an IP address of the communication source terminal 10 and the port number 320 as a communication source port number. In other words, in the present invention, the identifier 300 of the communication source application 40 is first obtained by the information obtaining device 120 of the communication source terminal 10.

The information transmission device 130 is connected to the dedicated communication path 30 and has a function of transmitting the identifier 300, the IP address 310 and the port number 320 obtained by the information obtaining device 120 by using the dedicated communication path 30.

The communication destination terminal 20 is a terminal including a communication device 200, an information reception device 210, a storage device 220 and an inquiry device 230.

The communication device 200 has a function of executing TCP/IP stream communication by using the general-purpose communication path 60.

The information reception device 210 is connected to the dedicated communication path 30 and has a function of receiving the identifier 300, the IP address 310 and the port number 320 transmitted by the information transmission device 130 by using the dedicated communication path 30.

The storage device 220 has a function of recording the identifier 300, the IP address 310 and the port number 320 which are received by the information reception device 210 as identifier correspondence information 2200, with a pair of the IP address 310 and the port number 320 correlated with the identifier 300.

Fig. 2 is a diagram showing arrangement of the identifier correspondence information 2200 recorded in the storage device 220 according to the present exemplary embodiment.

With reference to Fig. 2, the identifier correspondence information 2200 according to the present exemplary embodiment is recorded with a pair of the IP address 310 and the port number 320, and the identifier 300 correlated with each other which are received by the information reception device 210.

The communication destination application 50 has a function of, upon accepting TCP/IP stream communication by using the communication device 200, obtaining a communication source IP address (IP address 310) and a communication source port number (port number 320) from the TCP/IP stream communication and transferring the same to the inquiry device 230.

The inquiry device 230 has a function of obtaining the identifier 300 correlated with a pair of the communication source IP address (IP address 310) and the communication source port number (port number 320) transferred by the communication destination application 50 of the TCP/IP stream communication from the storage device 220 and transferring the same to the communication destination application 50.

The dedicated communication path 30 is a highly safe communication path which connects the communication source terminal 10 and the communication destination terminal 20 and has a function of communication through encryption of information or the like.

Accordingly, the communication destination terminal 20 according to the present exemplary embodiment accumulates, in the storage device 220, the identifier 300, the IP address 310 and the port number 320 transmitted by using the dedicated communication path 30 at the time of connection in the TCP/IP stream communication executed by using the general-purpose communication path 60.

As described in the foregoing, according to the present invention, the communication source terminal 10 obtains information about the communication source terminal 10 (the identifier 300 of the communication source application 40, the IP address 310 as the IP address of the communication source terminal 10, and the port number 320 of the communication source port number) in the communication based on also session information other than a packet. In addition, since the communication source terminal 10 transmits the obtained information of the communication source terminal 10 in the communication to the communication destination terminal 20 by using the dedicated communication path 30, the communication destination terminal 20 is allowed to precisely specify the communication source application 40 (to precisely specify whether it is a proper application or an unauthorized application).

Here, description will be made of a hardware structure of the communication source terminal 10.

Fig. 3 is a block diagram showing an example of a hardware structure of the communication source terminal 10 of the application specifying system according to the present exemplary embodiment.

With reference to Fig. 3, the communication source terminal 10 according to the present invention, which can be realized by the same hardware structure as that of a common computer device, comprises a CPU (Central Processing Unit) 601, a main storage unit 602 which is a main memory such as a RAM (Random Access Memory) for use as a data working region or a data temporary saving region, a communication control unit 603 for transmitting and receiving data through the Internet, a presentation unit 604 such as a liquid crystal display, a printer or a speaker, an input unit 605 such as a keyboard or a mouse, an interface unit 606 connected to a peripheral apparatus for transmitting and receiving data, a subsidiary storage unit 607 as a hard disk device formed of a non-volatile memory such as a ROM (Read Only Memory), a magnetic disk and a semiconductor memory, and a system bus 608 which connects the above-described components of the present information processing device with each other.

The communication source terminal 10 according to the present invention has its operation realized not only in hardware by having, on the communication source terminal 10, a circuit part formed of a hardware part mounted such as an LSI (Large Scale Integration) with a program realizing the functions incorporated but also in software by executing the program providing each function of the above-described components by the CPU 601 on the computer processing device.

More specifically, the CPU 601 realizes the above-described respective functions in software by loading the program stored in the subsidiary storage unit 607 into the main storage unit 602 and executing the same to control operation of the communication source terminal 10.

The communication destination terminal 20 may have such structure as described above to realize each of the above-described functions in hardware or software.

### (OPERATION OF THE FIRST EXEMPLARY EMBODIMENT)

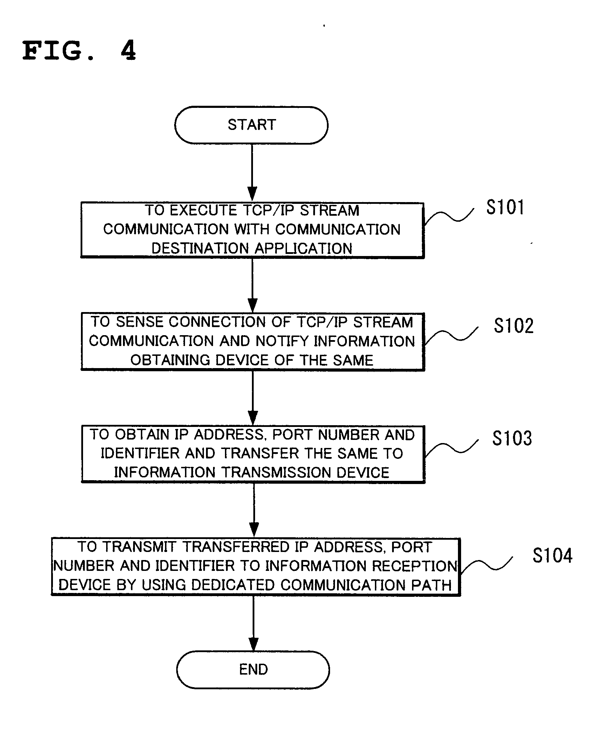

Next, operation of the application specifying system according to the present exemplary embodiment will be detailed with reference to Fig. 1 through Fig. 6. Fig. 4 through Fig. 6 are flow charts showing operation of each component of the application specifying system.

Assume that to the communication source terminal 10, the IP address 310 is assigned in advance as an IP address. Also assume that to the communication source application 40, the identifier 300 is assigned as an identifier for identifying the communication source application 40.

Fig. 4 is a flow chart showing operation of the communication source application 40, the communication sensing device 110, the information obtaining device 120 and the information transmission device 130 according to the present exemplary embodiment.

Assume now that the communication source application 40 executes TCP/IP stream communication with the communication destination application 50.

The communication source application 40 executes TCP/IP stream communication with the communication destination application 50 through the general-purpose communication path 60 by using the communication device 100 (Step S101 in Fig. 4). Assume that at the time of execution of the connection in the TCP/IP stream communication, the port number 320 is assigned as a communication source port number.

The communication sensing device 110 senses the connection of the TCP/IP stream communication by the communication source application 40 and notifies the information obtaining device 120 of the same (Step S102 in Fig. 4).

The information obtaining device 120 obtains the IP address 310, the port number 320 and the identifier 300 and transfers the same to the information transmission device 130 (Step S103 in Fig. 4).

The information transmission device 130 transmits the IP address 310, the port number 320 and the identifier 300 transferred from the information obtaining device 120 to the information reception device 210 by using the dedicated communication path 30 (Step S104 in Fig. 4).

By the foregoing operation of the communication source terminal 10, the communication destination terminal 20 accumulates, in the storage device 220, the IP address 310, the port number 320 and the identifier 300 transmitted by using the dedicated communication path 30 at the time of connection by the communication terminal 10 as the identifier correspondence information 2200.

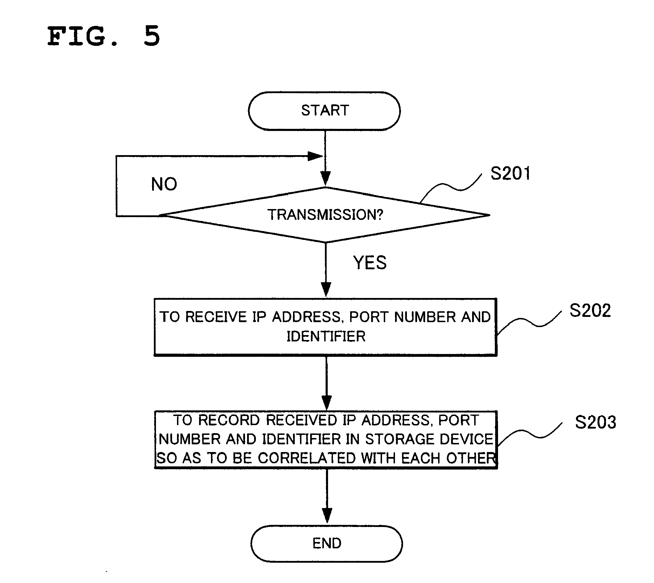

Fig. 5 is a flow chart showing operation of the information reception device 210 according to the present exemplary embodiment.

The information reception device 210 waits for transmission of information from the dedicated communication path 30 to determine whether transmission exists or not (Step S201 in Fig 5).

When transmission exists, the information reception device 210 receives the IP address 310, the port number 320 and the identifier 300 (Step S202 in Fig. 5) and the storage device 220 records, as the identifier correspondence information 2200, a pair of the IP address 310 and the port number 320 so as to be correlated with the identifier 300 which are received by the information reception device 210 (Step S203 in Fig. 5).

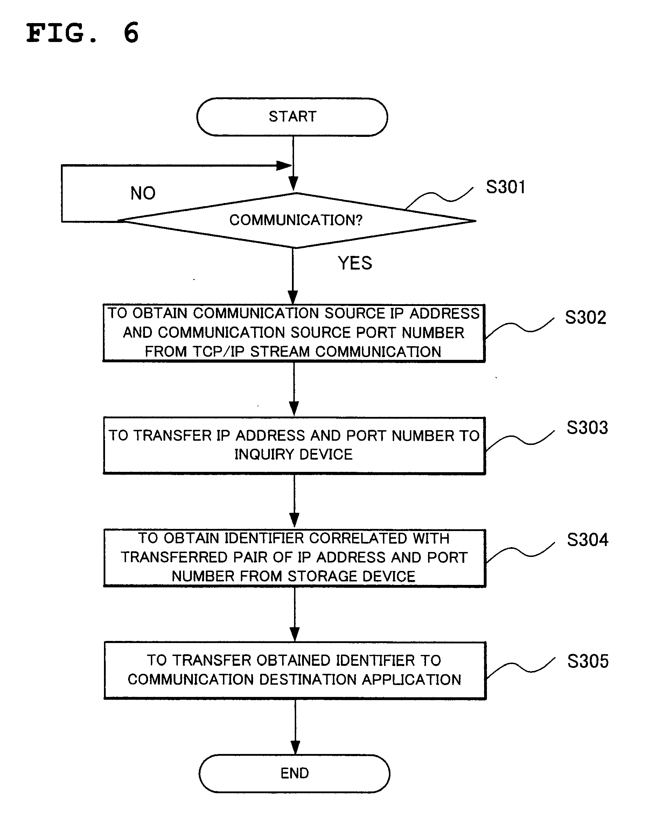

Fig. 6 is a flow chart showing operation of the communication destination application 50 and the inquiry device 230 according to the present exemplary embodiment.

The communication destination application 50 waits for TCP/IP stream communication from the communication source application 40 by using the communication device 200 to determine whether there exists communication or not (Step S301 in Fig. 6).

When the communication device 200 accepts TCP/IP stream communication, the communication destination application 50 obtains the IP address 310 as a communication source IP address and obtains the port number 320 as a communication source port number from the TCP/IP stream communication (Step S302 in Fig. 6).

The communication destination application 50 transfers the IP address 310 and the port number 320 to the inquiry device 230 (Step S303 in Fig. 6).

The inquiry device 230 obtains the identifier 300 correlated with the pair of the transferred IP address 310 and port number 320 from the storage device 220 based on the identifier correspondence information 2200 recorded in the storage device 220 (Step S304 in Fig. 6) and transfers the obtained identifier 300 to the communication destination application 50 (Step S305 in Fig. 6).

### (EFFECTS OF THE FIRST EXEMPLARY EMBODIMENT)

Next, effects of the application specifying system according to the present exemplary embodiment will be described.

First, according to the present exemplary embodiment, communication contents can be processed based on origin of the communication source application 40. For example, a request for inquiry about a data base can be allowed or refused based on origin of an inquiring source application.

The reason is that because the communication destination application 50 obtains the identifier 300 for identifying the communication source application 40 through the dedicated communication path 30, the communication source application 40 can be specified with high reliability.

Secondly, according to the present exemplary embodiment, alteration of the identifier 300 of the communication source application 40 needs not to be taken into consideration.

The reason is that the communication source terminal 10 obtains the identifier 300 of the communication source application 40 within the communication source terminal 10 and transmits the obtained identifier 300 of the communication source application 40 to the communication destination terminal 20 by using the dedicated communication path 30.

Thirdly, according to the present exemplary embodiment, it is unnecessary to modify a communication protocol between applications in the communication source application 40 and the communication destination application 50.

The reason is that acquisition and transmission/reception of the identifier 300 of the communication source application 40 are executed by the devices in the communication source terminal 10 and the devices in the communication destination terminal 20 and transmission/reception of the identifier 300 uses the dedicated communication path 30 different from the communication path between the above-described applications.

While the application specifying system according to the present exemplary embodiment has been described in a case where one communication source terminal 10 and one communication destination terminal 20 are provided, the number of the communication source terminals 10 and the communication destination terminals 20 is not limited.

In addition, although the application specifying system according to the present exemplary embodiment has been described separately with respect to the communication source terminal 10 and the communication destination terminal 20, one terminal may include a device forming the communication source terminal 10 and a device forming the communication destination terminal 20.

Furthermore, while the application specifying system according to the present exemplary embodiment has been described in a case where one communication source application 40 and one communication destination application 50 are provided, the number of the communication source applications 40 and the communication destination applications 50 is not limited.

### (SECOND EXEMPLARY EMBODIMENT)

Next, an application specifying system according to a second exemplary embodiment of the present invention will be detailed with reference to the drawings. Since the present exemplary embodiment corresponds to the first exemplary embodiment of the present invention, description will be made mainly of a difference in the following.

### (STRUCTURE OF THE SECOND EXEMPLARY EMBODIMENT)

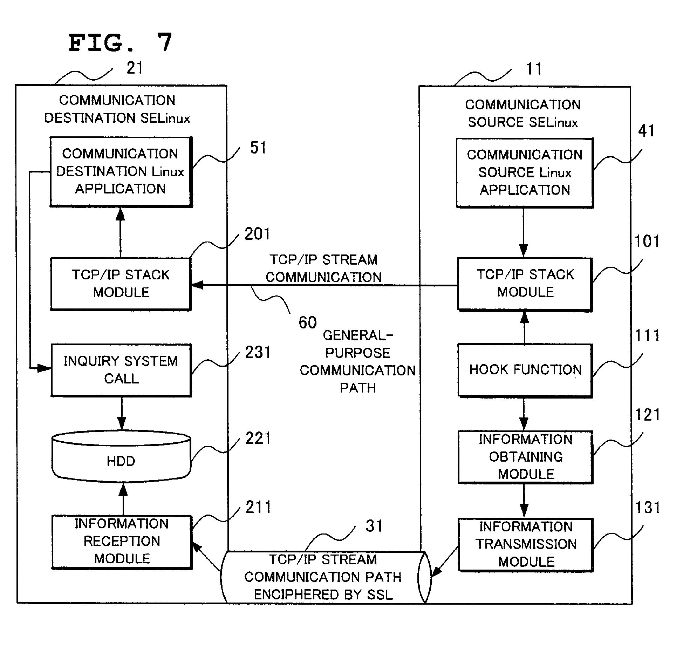

The present exemplary embodiment, as shown in Fig. 7, comprises a communication source SELinux (Security-Enhanced Linux) 11 as the communication source terminal 10 which has a TCP/IP stack module 101 as the communication device 100, a hook function 111 as the communication sensing device 110, an information obtaining module 121 as the information obtaining device 120 and an information transmission module 131 as the information transmission device 130, a communication destination SELinux 21 as the communication destination terminal 20 which has a TCP/IP stack module 201 as the communication device 200, an information reception module 211 as the information reception device 210, an HDD (hard disk drive) 221 as the storage device 220 and an inquiry system call 231 as the inquiry device 230, a TCP/IP stream communication path 31 enciphered by SSL (Secure Socket Layer) as the dedicated communication path 30, a communication source Linux application 41 as the communication source application 40 which is operable on the communication source SELinux 11, and communication destination Linux application 51 as the communication destination application 50 which is operable on the communication destination SELinux 21.

Assume here that as an IP address 311 of the communication source SELinux 11, 192.168.0.1 is assigned. In addition, as an identifier 301 for identifying the communication source Linux application 41, a security context character string (system_u:system_r:app_t) of the SELinux 21 is assigned.

### (OPERATION OF THE SECOND EXEMPLARY EMBODIMENT)

First, with reference to Fig. 4, operation will be described of the communication source Linux application 41, the hook function 111, the information obtaining module 121 and the information transmission module 131 according to the present exemplary embodiment.

Assume now that the communication source Linux application 41 executes TCP/IP stream communication with the communication destination Linux application 51 through the general-purpose communication path 60 by using the TCP/IP stack module 101 (Step S101 in Fig. 4).

Assume that at this time, the TCP/IP stack module 101 assigns No. 3000 as a communication source port number (the port number 321) for the execution of connection of the TCP/IP stream communication.

When connection of the TCP/IP stream communication is executed, the hook function 111 is called up. The hook function 111 calls up the information obtaining module 121 (Step S102 in Fig. 4).

The information obtaining module 121 obtains system_u:system_r:app_t as the identifier 301 for identifying the communication source Linux application 41 from the task information within the Linux, and 192.168.0.1 as the communication source IP address (IP address 311) and No. 3000 as the communication source port number (port number 321) from the information in the TCP/IP stream communication and transfers the same to the information transmission module 131 (Step S103 in Fig. 4).

The information transmission module 131 transmits the identifier 301 (system_u:system_r:app_t), the IP address 311 (192.168.0.1) and the port number 321 (No. 3000) to the information reception module 211 by using the TCP/IP stream communication path 31 enciphered by SSL which is different from the TCP/IP stream communication path between the communication source Linux application 41 and the communication destination Linux application 51 (Step S104 in Fig. 4).

Next, with reference to Fig. 5, description will be made of operation mainly of the information reception module 211 according to the present exemplary embodiment.

The information reception module 211 waits for transmission of information from the TCP/IP stream communication path 31 enciphered by SSL (Step S201 in Fig. 5).

The information transmission module 131, as described above, transmits the identifier 301 (system_u:system_r:app_t), the IP address 311 (192.168.0.1) and the port number 321 (No. 3000) to the information reception module 211 by using the TCP/IP stream communication path 31 enciphered by SSL which is different from the TCP/IP stream communication path between the communication source Linux application 41 and the communication destination Linux application 51.

The information reception module 211 receives the identifier 301 (system_u:system_r:app_t), the IP address 311 (192.168.0.1) and the port number 321 (No. 3000) from the TCP/IP stream communication path 31 enciphered by SSL to record a pair of the IP address 311 and the port number 321 correlated with the identifier 301 in the HDD 221 as identifier correspondence information 2201 (Steps S202 and S203 in Fig. 5).

Next, with reference to Fig. 6, operation of the communication destination Linux application 51 and the inquiry system call 231 according to the present exemplary embodiment will be described.

When accepting the TCP/IP stream communication using the general-purpose communication path 60 which is executed by the communication source Linux application 41 through the TCP/IP stack module 201, the communication destination Linux application 51 obtains the communication source IP address (IP address 311) (192.168.0.1) and the communication source port number (port number 321) (No. 3000) from the TCP/IP stream communication (Steps S301 and S302 in Fig. 6).

Next, the communication destination Linux application 51 transfers the IP address 311 (192.168.0.1) and the port number 321 (No. 3000) to the argument to call up the inquiry system call 231 (Step S303 in Fig. 6).

Based on the identifier correspondence information 2201 recorded in the HDD 221, the inquiry system call 231 obtains, from the HDD 221, the identifier 301 (system_u:system_r:app_t) correlated with the IP address 311 and the port number 321 transferred to the argument and transfers the same to the communication destination Linux application 51 (Steps S304 and S305 in Fig. 6).

### (EFFECTS OF THE SECOND EXEMPLARY EMBODIMENT)

For the same reason as that of the first exemplary embodiment, the present exemplary embodiment enables processing to be executed based on the origin of the communication source Linux application 41 and also enables the need of taking alternation of the identifier 301 of the communication source Linux application 41 into consideration to be eliminated, and further enables the need of modifying a communication protocol between applications in the communication source Linux application 41 and the communication destination Linux application 51 to be eliminated.

### (THIRD EXEMPLARY EMBODIMENT)

Next, an application specifying system according to a third exemplary embodiment of the present invention will be detailed with reference to the drawings. Since the present exemplary embodiment relates to a system comprising all the components of the communication source terminal 10 and the communication destination terminal 20 according to the first exemplary embodiment of the present invention provided in a single terminal 800, description will be made mainly of a difference in the following.

### (STRUCTURE OF THE THIRD EXEMPLARY EMBODIMENT)

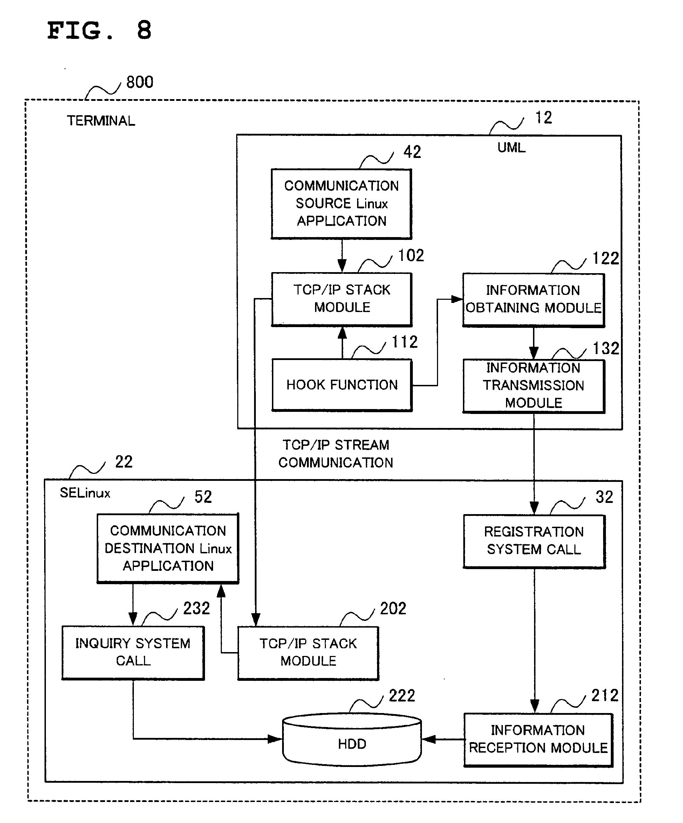

Fig. 8 is a block diagram showing a structure of the application specifying system according to the present exemplary embodiment.

The present exemplary embodiment, as shown in Fig. 8, comprises a UML (User Mode Linux) 12 made into SELinux as the communication source terminal 10 which has a TCP/IP stack module 102 as the communication device 100, a hook function 112 as the communication sensing device 110, an information obtaining module 122 as the information obtaining device 120 and an information transmission module 132 as the information transmission device 130, a SELinux 22 as the communication destination terminal 20 which has a TCP/IP stack module 202 as the communication device 200, an information reception module 212 as the information reception device 210, an HDD 222 as the storage device 220 and an inquiry system call 232 as the inquiry device 230, a registration system call 32 provided by SELinux as the dedicated path 30, a communication source Linux application 42 as the communication source application 40 which is operable on the UML 12, and a communication destination Linux application 52 as the communication destination application 50 which is operable on the SELinux 22. The UML 12 operates on the SELinux 22.

Assume here that as an IP address 312 of the UML 12, 192.168.0.1 is assigned. In addition, as an identifier 302 for identifying the communication source Linux application 42, a security context character string (system_u:system_r:app_t) of the SELinux 22 is assigned.

### (OPERATION OF THE THIRD EXEMPLARY EMBODIMENT)

First, with reference to Fig. 4, operation will be described of the communication source Linux application 42, the hook function 112, the information obtaining module 122, the information transmission module 132 and the information reception module 212 according to the present exemplary embodiment.

Assume now that the communication source Linux application 42 executes TCP/IP stream communication with the communication destination Linux application 52 by using the TCP/IP stack module 101 (Step S101 in Fig. 4).

Assume that at this time, the TCP/IP stack module 102 assigns No. 3000 as a communication source port number (the port number 322) for the execution of connection of the TCP/IP stream communication.

When the connection is executed in the TCP/IP stream communication, the hook function 112 is called up. The hook function 112 calls up the information obtaining module 122 (Step S102 in Fig. 4).

The information obtaining module 122 obtains system_u:system_r:app_t as the identifier 302 of the communication source Linux application 42 from the task information within the Linux, 192.168.0.1 as the communication source IP address (IP address 312) and No. 3000 as the communication source port number (port number 322) from the information in the TCP/IP stream communication and transfers the same to the information transmission module 132 (Step S103 in Fig. 4).

The information transmission module 132 calls up the registration system call 32, with the identifier 302 (system_u:system_r:app_t), the IP address 312 (192.168.0.1) and the port number 322 (No. 3000) as arguments.

The information reception module 212 obtains the identifier 302 (system_u:system_r:app_t), the IP address 312 (192.168.0.1) and the port number 322 (No. 3000) from the arguments of the registration system call 32 (Step S104 in Fig. 4) to record a pair of the IP address 312 and the port umber 322 correlated with the identifier 302 in the HDD 222.

Next, with reference to Fig. 5, description will be made of operation of the information reception module 212 according to the present exemplary embodiment.

The information reception module 212 waits for transmission of information from the registration system call 32 provided by SELinux (Step S201 in Fig. 5).

The information reception module 212, as described above, obtains the identifier 302 (system_u:system_r:app_t), the IP address 312 (192.168.0.1) and the port number 322 (No. 3000) from the arguments of the registration system call 32 and records a pair of the IP address 312 and the port umber 322 so as to be correlated with the identifier 302 in the HDD 222 as identifier correspondence information 2202 (Steps S202 and S203 in Fig. 5).

Next, with reference to Fig. 6, operation of the communication destination Linux application 52 and the inquiry system call 232 according to the present exemplary embodiment will be described.

When accepting the TCP/IP stream communication executed by the communication source Linux application 42 through the TCP/IP stack module 202, the communication destination Linux application 52 obtains the transmission source IP address (IP address 312) (192.168.0.1) and the transmission source port number (port number 322) (No. 3000) from the TCP/IP stream communication (Steps S301 and S302 in Fig. 6).

Next, the communication destination Linux application 52 transfers the IP address 312 (192.168.0.1) and the port number 322 (No. 3000) to the arguments to call up the inquiry system call 232 (Step S303 in Fig. 6).

Based on the identifier correspondence information 2202 recorded in the HDD 222, the inquiry system call 232 obtains, from the HDD 222, the identifier 302 (system_u:system_r:app_t) correlated with the IP address 312 and the port number 322 transferred to the arguments and transfers the same to the communication destination Linux application 52 (Steps S304 and S305 in Fig. 6).

### (EFFECTS OF THE THIRD EXEMPLARY EMBODIMENT)

For the same reason as that of the first exemplary embodiment, the present exemplary embodiment enables processing to be executed based on the origin of the communication source Linux application 42 and also enables the need of taking alternation of the identifier 302 of the communication source Linux application 42 into consideration to be eliminated, and further enables the need of modifying a communication protocol between applications in the communication source Linux application 42 and the communication destination Linux application 52 to be eliminated.

As described in the foregoing, the present exemplary embodiment of the present invention has the communication source terminal (10 in Fig. 1) comprising the communication device (100 in Fig. 1) for executing TCP/IP stream communication by using the general-purpose communication path 60, the communication sensing device (110 in Fig. 1) for sensing execution of connection of the TCP/IP stream communication, the information obtaining device (120 in Fig. 1) for obtaining information about communication and about an application executing connection, and the information transmission device (130 in Fig. 1) for transmitting the obtained information about the communication and the application by using the dedicated communication path (30 in Fig. 1), the communication destination terminal (20 in Fig. 1) comprising the communication device (200 in Fig. 1) for executing TCP/IP stream communication by using the general-purpose communication path 60, the information reception device (210 in Fig. 1) for obtaining information about communication and an application by using the dedicated communication path (30 in Fig. 1), the storage device (220 in Fig. 1) for storing the obtained information about the communication and the application, and the inquiry device (230 in Fig. 1) for obtaining information about an application from the storage device, the dedicated communication path (30 in Fig. 1) for connecting the communication source terminal (10 in Fig. 1) and the communication destination terminal (20 in Fig. 1), the communication source application (40 in Fig. 1) operable on the communication source terminal (10 in Fig. 1), and the communication destination application (50 in Fig. 1) operable on the communication destination terminal (20 in Fig. 1).

The objects of the present invention can be attained by adoption of such a structure as described above in which the information obtaining device obtains, when the communication sensing device senses execution of connection of the TCP/IP stream communication with the communication destination application by using the communication device based on the communication source application, an identifier, a communication source IP address and a communication source port number of the communication source application and transfers the obtained identifier, IP address and port number to the information transmission device, the information transmission device transmits the transferred identifier, IP address and port number to the information reception device by using a safe communication path, the information reception device records a pair of the IP address and the port number so as to be correlated with the identifier in the storage device, the communication destination application, when accepting the TCP/IP stream communication from the communication source application by using the communication device, transfers the communication source IP address and the communication source port number to the inquiry device, and the inquiry device obtains the identifier correlated with the transferred IP address and port number from the storage device and transfers the same to the communication destination application.

The above-described exemplary embodiments of the present invention attain the effect that proper information of a communication source application can be obtained.

The reason is that used on one side is a communication terminal for executing communication with other communication terminal through a network, which is a communication terminal comprising a communication unit for transmitting information about communication with other communication terminal as a communication destination to other communication terminal and an information transmission unit for transmitting information about communication and information about an application of a communication source executing communication to other communication terminal through a dedicated communication path whose safety is high other than a communication path through which the communication unit communicates, and used on the other side is a communication terminal for executing communication with other communication terminal through a network, which is a communication terminal comprising a communication unit for transmitting information about communication to other communication terminal as a communication destination or receiving information about communication from other communication terminal as a communication source, an information transmission unit for transmitting information about communication and information about an application of a communication source executing the communication to other communication terminal as a communication destination through a dedicated communication path whose safety is high other than a communication path through which the communication unit communicates, an information reception unit for receiving information about communication and information about an application of a communication source executing the communication from other communication terminal as a communication source through a dedicated communication path, a recording unit for recording information related to communication and information about an application which are received by the information reception unit so as to be correlated with each other, and an inquiry unit for obtaining, from the recording unit, information about an application corresponding to the information related to communication which is received by the communication unit.

Another effect is that no information about an application of a communication source is altered.

The reason is that a communication terminal of a communication source obtains information about an application of the communication source and transmits the obtained information to a communication terminal of a communication destination by using a dedicated communication path whose safety is high.

A further effect is that no modification is required of TCP/IP stream communication executed between a communication source application and a communication destination application and of a protocol between the applications.

The reason is that the communication terminal of the communication source obtains information about an application of the communication source and information about communication with other communication terminal of the communication destination and transmits the obtained information to other communication terminal of the communication destination by using a dedicated communication path whose safety is high other than a communication path through which the communication unit communicates, and the application of the communication destination obtains information about the application of the communication source by using the inquiry unit.

Although the present invention has been described with respect to the preferred exemplary embodiments in the foregoing, the present invention is not necessarily limited to the above-described exemplary embodiments and can be implemented in various forms within a scope of its technical idea.

### INCORPORATION BY REFERENCE

The present application claims the priority based on Japanese Patent Application No. 2006-342284, filed on December 20, 2006 and incorporates all the disclosure thereof.

### INDUSTRIAL APPLICABILITY

The present invention is applicable for use in obtaining, when receiving TCP/IP stream communication from a communication source application operable on another terminal, the origin of the communication source application.

## Claims

1. A communication terminal which communicates with other communication terminal through a network, comprising:
a communication unit for transmitting information related to said communication with said other communication terminal of a communication destination to said other communication terminal; and
an information transmission unit for transmitting, to said other communication terminal through a dedicated communication path whose safety is high other than a communication path through which said communication unit communicates, information related to said communication and information about an application of a communication source which is executing said communication.

2. A communication terminal which communicates with other communication terminal through a network, comprising:
a communication unit for transmitting information related to communication to said other communication terminal of a communication destination or receiving information related to communication from said other communication terminal of a communication source;
an information transmission unit for transmitting, to said other communication terminal of the communication destination through a dedicated communication path whose safety is high other than a communication path through which said communication unit communicates, information related to said communication and information about an application of a communication source which is executing said communication;
an information reception unit for receiving, from said other communication terminal of the communication source through said dedicated communication path, information about said communication and information about the application of the communication source which is executing said communication;
a recording unit for recording the information related to said communication and the information about said application which are received by said information reception unit so as to be correlated with each other; and
an inquiry unit for obtaining, from said recording unit, the information about said application corresponding to the information related to said communication which is received by said communication unit.

3. The communication terminal according to claim 1 or claim 2, further comprising:
a communication sensing unit for sensing communication with said other communication terminal of the communication destination by said communication unit, wherein
said information transmission unit transmits information related to said communication which is sensed by said communication sensing unit and the information about said application to said other communication terminal of the communication destination.

4. A communication terminal having an operating system which communicates with other operating system through a network, comprising:
a communication unit for transmitting information related to communication to said other operating system of a communication destination or receiving information related to communication from said other operating system of a communication source;
an information transmission unit for transmitting, to said other operating system of the communication destination through a dedicated system call whose safety is high other than a communication path through which said communication unit communicates, information related to said communication and information about an application of a communication source which is executing said communication;
an information reception unit for receiving, from said other operating system of the communication source through said dedicated communication path, information related to said communication and information about the application of the communication source which is executing said communication;
a recording unit for recording the information related to said communication and the information about said application which are received by said information reception unit so as to be correlated with each other; and
an inquiry unit for obtaining, from said recording unit, the information about said application corresponding to the information related to said communication which is received by said communication unit.

5. The communication terminal according to claim 4, comprising:
a communication sensing unit for sensing communication with said other operating system of the communication destination by said communication unit, wherein
said information transmission unit transmits information related to said communication which is sensed by said communication sensing unit and the information about said application to said other operating system of the communication destination.

6. The communication terminal according to any one of claim 1 through claim 5, comprising:
an information obtaining unit for obtaining the information related to said communication and the information about said application to transfer the information to said information transmission unit.

7. A communication terminal which communicates with other communication terminal through a network, comprising:
a communication unit for receiving information related to communication from said other communication terminal of a transmission source;
an information reception unit for receiving, through a dedicated communication path whose safety is high other than a communication path through which said communication unit communicates, information related to said communication and information about an application of a communication source which is executing said communication;
a recording unit for recording the information related to said communication and the information about said application which are received by said information reception unit so as to be correlated with each other; and
an inquiry unit for obtaining, from said recording unit, the information about said application corresponding to the information related to said communication which is received by said communication unit.

8. A communication system having a communication terminal which communicates with other communication terminal through a network, wherein said communication terminal includes communication terminals connected by a dedicated communication path,
a first communication terminal comprising
a communication unit for transmitting information related to said communication with said other communication terminal of a communication destination to said other communication terminal, and
an information transmission unit for transmitting, to said other communication terminal through said dedicated communication path whose safety is high other than a communication path through which said communication unit communicates, information related to said communication and information about an application of a communication source which is executing said communication, and
a second communication terminal comprising
a communication unit for receiving information related to communication from said other communication terminal of the transmission source,
an information reception unit for receiving, through said dedicated communication path whose safety is high other than the communication path through which said communication unit communicates, information related to said communication and information about the application of the communication source which is executing said communication,
a recording unit for recording said information related to said communication and said information about said application which are received by said information reception unit so as to be correlated with each other, and
an inquiry unit for obtaining, from said recording unit, said information about said application corresponding to said information related to said communication which is received by said communication unit.

9. A communication system having a communication terminal which communicates with other communication terminal through a network, wherein said communication terminal comprising:
a communication unit for transmitting information related to communication to said other communication terminal of a communication destination or receiving information related to communication from said other communication terminal of a communication source;
an information transmission unit for transmitting, to said other communication terminal of the communication destination through a dedicated communication path whose safety is high other than a communication path through which said communication unit communicates, information related to said communication and information about an application of a communication source which is executing said communication;
an information reception unit for receiving, from said other communication terminal of the communication source through said dedicated communication path, information related to said communication and information about the application of the communication source which is executing said communication;
a recording unit for recording the information related to said communication and the information about said application which are received by said information reception unit so as to be correlated with each other; and
an inquiry unit for obtaining, from said recording unit, the information about said application corresponding to the information related to said communication which is received by said communication unit; wherein
said communication terminal is connected to said other communication terminal through said dedicated communication path.

10. The communication system according to claim 8 or claim 9, wherein
said communication terminal comprises a communication sensing unit for sensing communication with said other communication terminal of the communication destination by said communication unit, and
said information transmission unit transmits information related to said communication which is sensed by said communication sensing unit and the information about said application to said other communication terminal of the communication destination.

11. The communication system according to any one of claim 8 through claim 10, wherein said communication terminal comprises
an information obtaining unit for obtaining the information related to said communication and the information about said application to transfer the information to said information transmission unit.

12. The communication system according to any one of claim 8 through claim 11, wherein
the information related to said communication includes an IP address and a port number of said communication terminal of the communication source, and
said communication terminal records, in said recording unit, said IP address and said port number of the information related to said communication which is obtained by using said dedicated communication path so as to be correlated with said application identification information obtained by using said dedicated communication path.

13. The communication system according to any one of claim 8 through claim 12, wherein at least one application operates on each of said communication terminals of the communication source and the communication destination.

14. The communication system according to claim 10, wherein said communication sensing unit senses connection of TCP/IP stream communication with said other communication terminal of the communication destination by the application of the communication source to notify said information obtaining device of the sensing result.

15. The communication system according to claim 12, wherein
said application notifies said inquiry unit of said IP address and said port number obtained from the TCP/IP stream communication accepted from said other communication terminal of the communication source by using said communication terminal, and
said inquiry unit obtains, from said recording unit, information about said application of the communication source corresponding to notified said IP address and said port number to transfer the information to said application which has notified the inquiry unit of said IP address and said port number.

16. A communication method in a communication system having a communication terminal which communicates with other communication terminal through a network, wherein
said communication terminal comprising:
a first communication step of transmitting information related to said communication with said other communication terminal of a communication destination to said other communication terminal; and
an information transmission step of transmitting, to said other communication terminal through a dedicated communication path whose safety is high other than a communication path used at said communication step, information related to said communication and information about an application of a communication source which is executing said communication;
said other communication terminal of the communication destination comprising:
a second communication step of receiving information related to communication from said other communication terminal of the transmission source;
an information reception step of receiving, through said dedicated communication path, the information related to said communication and the information about the application of the communication source which is executing said communication;
a recording step of recording the information related to said communication and the information about said application which are received at said information reception step in a recording unit so as to be correlated with each other; and
an inquiry step of obtaining, from said recording unit, the information about said application corresponding to the information related to said communication which is received at said second communication step.

17. The communication method according to claim 16, wherein said communication terminal comprises a communication sensing step of sensing communication with said other communication terminal of the communication destination at said first communication step, and
at said information transmission step, transmits information related to said communication which is sensed at said communication sensing step and the information about said application to said other communication terminal of the communication destination.

18. The communication method according to claim 17, wherein at said communication sensing step, connection of TCP/IP stream communication by the application executing the communication is sensed.

19. The communication method according to any one of claim 16 through claim 18, wherein said communication terminal comprises the information obtaining step of obtaining information related to said communication and information about said application and transferring the information to said information transmission step.

20. The communication method according to claim 19, wherein at said information obtaining step, an IP address and a port number of said communication terminal of the communication source and information about said application in the TCP/IP stream communication with said other communication terminal of the communication destination are obtained.

21. The communication method according to claim 20, wherein at said information transmission step, the IP address and the port number of said communication terminal of the communication source and the information about said application are transmitted.

22. The communication method according to claim 21, wherein
at said information reception step,
the IP address and the port number of said communication terminal of the communication source and the information about said application are received, and
at said recording step, the IP address and the port number of said communication terminal of the communication source and the information about said application are recorded in said recording unit so as to be correlated with each other.

23. The communication method according to claim 22, wherein
at said second communication step,
the IP address and the port number of said communication terminal of the communication source are received from TCP/IP stream communication, and
at said inquiry step, information about said application corresponding to the IP address and the port number of said communication terminal of the communication source are obtained from said recording unit.

24. A communication method in a communication system having a communication terminal which communicates with other communication terminal through a network, wherein said communication terminal comprising:
a communication step of transmitting information related to said communication with said other communication terminal of a communication destination to said other communication terminal; and
an information transmission step of transmitting, to said other communication terminal through a dedicated communication path whose safety is high other than a communication path used at said communication step, information related to said communication and information about an application of a communication source which is executing said communication.

25. The communication method according to claim 24, wherein
said communication terminal comprises
a communication sensing step of sensing communication with said other communication terminal of the communication destination at said communication step, and wherein at said information transmission step,
information related to said communication which is sensed at said communication sensing step and the information about said application are transmitted to said other communication terminal of the communication destination.

26. A communication method in a communication system having a communication terminal which communicates with other communication terminal through a network, wherein said communication terminal comprising:
a communication step of receiving information related to communication from said other communication terminal of a communication source;
an information reception step of receiving, through said dedicated communication path, information related to said communication and information about an application of the communication source which executes said communication;
a recording step of recording, in a recording unit, the information related to said communication and the information about said application which are received at said information reception step so as to be correlated with each other; and
an inquiry step of obtaining, from said recording unit, the information about said application corresponding to the information related to said communication which is received at said communication step.

27. A communication method of a terminal having an operating system which communicates with other operating system through a network, wherein said terminal comprising:
a first communication step of transmitting information related to said communication with said other operating system of a communication destination to said other operating system;
an information transmission step of transmitting, to said other operating system through a dedicated system call whose safety is high other than a communication path used at said first communication step, information related to said communication and information about an application of a communication source which is executing said communication;
a second communication step of receiving information related to communication from said other operating system of the transmission source;
an information reception step of receiving, through said dedicated communication path, the information related to said communication and the information about the application of the communication source which is executing said communication;
a recording step of recording the information related to said communication and the information about said application which are received at said information reception step so as to be correlated with each other in a recording unit; and
an inquiry step of obtaining, from said recording unit, the information about said application corresponding to the information related to said communication which is received at said communication step.

28. The communication method according to claim 27, wherein said terminal comprises a communication sensing step of sensing communication with said other operating system of the communication destination by said communication processing, wherein
at said information transmission step, transmits information related to said communication which is sensed at said communication sensing step and the information about said application to said other operating system of the communication destination.

29. The communication method according to any one of claim 24 through claim 28, wherein said communication terminal or said terminal comprises the communication obtaining step of obtaining the information related to said communication and the information about said application to transfer the information to said information transmission step.

30. A program realized by a communication terminal which communicates with other communication terminal through a network, which causes
said communication terminal to execute
a first communication processing of transmitting information related to said communication with said other communication terminal of a communication destination to said other communication terminal, and
an information transmission processing of transmitting, to said other communication terminal through a dedicated communication path whose safety is high other than a communication path used in said communication processing, information related to said communication and information about an application of a communication source which is executing said communication, and
said other communication terminal of the communication destination to execute
a second communication processing of receiving information related to communication from said other communication terminal of the transmission source,
an information reception processing of receiving, through said dedicated communication path, information related to said communication and information about the application of the communication source which is executing said communication,
a recording processing of recording the information related to said communication and the information about said application which are received at said information reception step so as to be correlated with each other in a recording unit, and
an inquiry processing of obtaining, from said recording unit, the information about said application corresponding to the information related to said communication which is received at said second communication step.

31. The program according to claim 30, which causes said communication terminal
to execute the communication sensing processing of sensing communication with said other communication terminal of the communication destination in said first communication processing, and
to transmit, in said information transmission processing, information related to said communication which is sensed at said communication sensing step and the information about said application to said other communication terminal of the communication destination.

32. The program according to claim 31, wherein in said communication sensing processing, connection of TCP/IP stream communication by the application executing the communication is sensed.

33. The program according to any one of claim 30 through claim 32, which causes said communication terminal to execute the information obtaining processing of obtaining information related to said communication and information about said application and transferring the information to said information transmission processing.

34. The program according to claim 33, wherein in said information obtaining processing, an IP address and a port number of said communication terminal of the communication source and information about said application in the TCP/IP stream communication with said other communication terminal of the communication destination are obtained.

35. The program according to claim 34, wherein
in said first communication processing, the IP address and the port number of said communication terminal of the communication source are transmitted from the TCP/IP stream communication,
in said information transmission processing, the IP address and the port number of said communication terminal of the communication source and the information about said application are transmitted,
in said information reception processing,
the IP address and the port number of said communication terminal of the communication source and the information about said application are received,
in said recording processing, the IP address and the port number of said communication terminal of the communication source and the information about said application are recorded in said recording unit so as to be correlated with each other,
in said second communication processing, the IP address and the port number of said communication terminal of the communication source are received from the TCP/IP stream communication, and
in said inquiry processing, the information about said application corresponding to the IP address and the port number of said communication terminal of the communication source are obtained from said recording unit.

36. A program realized by a communication terminal which communicates with other communication terminal through a network, which causes said communication terminal to execute
a communication processing of transmitting information related to said communication with said other communication terminal of a communication destination to said other communication terminal, and
an information transmission processing of transmitting, to said other communication terminal through a dedicated communication path whose safety is high other than a communication path used in said communication processing, information related to said communication and information about an application of a communication source which is executing said communication.

37. The program according to claim 36, which causes said communication terminal
to execute the communication sensing processing of sensing communication with said other communication terminal of the communication destination in said communication processing, and
in said information transmission processing, to transmit information related to said communication which is sensed in said communication sensing processing and the information about said application to said other communication terminal of the communication destination.

38. A program realized by a communication terminal which communicates with other communication terminal through a network, which causes said communication terminal to execute
a communication processing of receiving information related to communication from said other communication terminal of a communication source,
an information reception processing of receiving, through said dedicated communication path, information related to said communication and information about an application of the communication source which executes said communication,
a recording processing of recording, in a recording unit, the information related to said communication and the information about said application which are received in said information reception processing so as to be correlated with each other, and
an inquiry processing of obtaining, from said recording unit, the information about said application corresponding to the information related to said communication which is received in said communication processing.

39. A program realized by a terminal having an operating system which communicates with other operating system through a network, which causes said terminal to execute
a first communication processing of transmitting information related to said communication with said other operating system of a communication destination to said other operating system,
an information transmission processing of transmitting, to said other operating system through a dedicated system call whose safety is high other than a communication path used in said first communication processing, information related to said communication and information about an application of a communication source which is executing said communication,
a second communication processing of receiving information related to communication from said other operating system of the transmission source,
an information reception processing of receiving, through said dedicated communication path, the information related to said communication and the information about the application of the communication source which is executing said communication,
a recording processing of recording the information related to said communication and the information about said application which are received in said information reception processing so as to be correlated with each other in a recording unit, and
an inquiry processing of obtaining, from said recording unit, the information about said application corresponding to the information related to said communication which is received in said communication processing.

40. The program according to claim 39, which causes said terminal
to execute the communication sensing processing of sensing communication with said other operating system of the communication destination by said communication processing, and
in said information transmission processing, to transmit information related to said communication which is sensed in said communication sensing processing and the information about said application to said other operating system of the communication destination.

41. The program according to any one of claim 36 through claim 40, which causes said communication terminal or said terminal to execute the information obtaining processing of obtaining the information related to said communication and the information about said application to transfer the information to said information transmission processing.

## Amended claims

### Amended claims under Art. 19.1 PCT

**1.** (Currently Amended) A communication terminal which communicates with other communication terminal through a network, comprising:
a communication unit for executing TCP/IP stream communication with said other communication terminal;
a communication sensing unit for sensing connection of the TCP/IP stream communication with said other communication terminal of a communication destination by an application of a communication source;
an information obtaining unit for obtaining information about the application of said communication source sensed by said communication sensing unit and information related to said TCP/IP stream communication; and
an information transmission unit for transmitting, to said other communication terminal through a dedicated communication path whose safety is high other than a communication path through which said communication unit communicates, said information about said application of said communication source and said information related to said TCP/IP stream communication which are obtained by said information obtaining unit.

**2.** (Currently Amended) The communication terminal according to claim 1, wherein
said information related to said TCP/IP stream communication includes an IP address and a port number of said communication terminal, and
said information about the application of said communication source includes an identifier of the application of said communication source.

**3.** (Currently Amended) A communication terminal having a plurality of operating systems including a first operating system and a second operating system, wherein
said first operating system comprising:
a first communication unit for executing TCP/IP stream communication with said second operating system;
a communication sensing unit for sensing connection of TCP/IP stream communication by an application of a communication source which is executing communication with said second operating system;
an information obtaining unit for obtaining information about the application of said communication source sensed by said communication sensing unit and information related to said TCP/IP stream communication; and
an information transmission unit for transmitting, to said second operating system through a dedicated system call whose safety is high other than a communication path through which said first communication unit communicates, the information about the application of said communication source and the information related to said TCP/IP stream communication which are obtained by said information obtaining unit, wherein
said second operating system comprising:
a second communication unit for receiving TCP/IP stream communication from said first operating system;
an information reception unit for receiving, from said first operating system through said dedicated communication path, the information related to said TCP/IP stream communication and the information about the application of said communication source;
a recording unit for recording the information related to said TCP/IP stream communication and the information about the application of said communication source which are received by said information reception unit so as to be correlated with each other;
an inquiry unit for obtaining, from said recording unit, the information about the application of said communication source corresponding to the information related to said TCP/IP stream communication which is received by said second communication unit; and
an application of a communication destination for accepting TCP/IP stream communication from said first operating system by using said second communication unit, obtaining information related to the accepted TCP/IP stream communication and transferring the obtained information related to said TCP/IP stream communication to said inquiry unit to obtain the information about the application of said communication source corresponding to the information related to said TCP/IP stream communication from said inquiry unit.

**4.** (Currently Amended) The communication terminal according to claim 3, wherein
said information related to said TCP/IP stream communication includes an IP address and a port number of said first operating system of the communication source, and
said information about said communication source application includes an identifier of the application of said communication source.

**5.** (Currently Amended) A communication terminal which communicates with other communication terminal through a network, comprising:
a communication unit for receiving TCP/IP stream communication from said other communication terminal;
an information reception unit for receiving, through a dedicated communication path whose safety is high other than a communication path through which said communication unit communicates, information about an application of a communication source and information related to the TCP/IP stream communication;
a recording unit for recording the information related to said TCP/IP stream communication and the information about the application of said communication source which are received by said information reception unit so as to be correlated with each other;
an application of a communication destination for obtaining the information related to the TCP/IP stream communication from the TCP/IP stream communication accepted from said other communication terminal by using said communication unit; and
an inquiry unit for obtaining, from said recording unit, the information about the application of said communication source corresponding to the information related to the TCP/IP stream communication which is obtained by the application of said communication destination and transferring the information to the application of said communication destination.

**6.** (Currently Amended) The communication terminal according to claim 5, wherein
said information related to said TCP/IP stream communication includes an IP address and a port number ofsaid other communication terminal, and
said information about the application of said communication source includes an identifier of the application of said communication source.

**7.** (Currently Amended) The communication terminal according to any one of claims 2, 4 and 6, wherein said identifier of the application of said communication source is a process ID.

**8.** (Currently Amended) A communication system having a communication terminal which communicates with other communication terminal through a network, wherein
said communication terminal includes first and second communication terminals connected by a dedicated communication path,
said first communication terminal comprising:
a communication unit for executing TCP/IP stream communication with said other communication terminal;
a communication sensing unit for sensing connection of TCP/IP stream communication by an application of a communication source which is executing communication with said other communication terminal;
an information obtaining unit for obtaining the information about the application of said communication source sensed by said communication sensing unit and information related to said TCP/IP stream communication; and
an information transmission unit for transmitting, to said other communication terminal through a dedicated communication path whose safety is high other than a communication path through which said communication unit communicates, said information about the application of said communication source and said information related to said TCP/IP stream communication which are obtained by said information obtaining unit, wherein
said second communication terminal comprising:
a communication unit for receiving TCP/IP stream communication from said communication terminal;
an information reception unit for receiving, through the dedicated communication path whose safety is high other than the communication path through which said communication unit communicates, said information related to said TCP/IP stream communication and said information about the application of said communication source;
a recording unit for recording said information related to said TCP/IP stream communication and said information about said application of said communication source which are received by said information reception unit so as to be correlated with each other; and
an inquiry unit for obtaining, from said recording unit, said information about said application of said communication source corresponding to said information related to said TCP/IP stream communication which is received by said communication unit.

**9.** (Currently Amended) The communication system according to claim 8, wherein on said second communication terminal, an application of a communication destination operates which
accepts TCP/IP stream communication from said first communication terminal by using said communication unit to obtain information related to the accepted TCP/IP stream communication,
transfers the obtained information related to said TCP/IP stream communication to said inquiry unit, and
obtains said information about the application of said communication source corresponding to said information related to said TCP/IP stream communication from said inquiry unit.

**10.** (Currently Amended) The communication system according to claim 8 or claim 9, wherein
said information related to said TCP/IP stream communication includes an IP address and a port number of said communication terminal, and
said information about the application of said communication source includes an identifier of the application of said communication source.

**11.** (Currently Amended) The communication system according to claim 10, wherein said identifier of the application of said communication source is a process ID.

**12.** (Currently Amended) A communication system having a communication terminal that communicates with other communication terminal through a network,
which system is connected to said other communication terminal by a dedicated communication path and comprising:
a communication unit for executing TCP/IP stream communication with said other communication terminal and receiving TCP/IP stream communication from said other communication terminal;
a communication sensing unit for sensing connection of first TCP/IP stream communication by a first application which is executing communication with said other communication terminal of a communication destination;
an information obtaining unit for obtaining information about said first application sensed by said communication sensing unit and information related to said first TCP/IP stream communication;
an information transmission unit for transmitting, to said other communication terminal of the communication destination through said dedicated communication path whose safety is high other than a communication path through which said communication unit communicates, the information about said first application and the information related to said first TCP/IP stream communication which are obtained by said information obtaining unit;
an information reception unit for receiving, from said other communication terminal through said dedicated communication path, information related to second TCP/IP stream communication and information about a second application;
a recording unit for recording the information related to said second TCP/IP stream communication and the information about said second application which are received by said information reception unit so as to be correlated with each other; and
an inquiry unit for obtaining, from said recording unit, the information about said second application corresponding to the information related to said second TCP/IP stream communication which is received by said communication unit.

**13.** (Currently Amended) The communication system according to claim 12, wherein on said communication terminal, a third application operates which
obtains the information related to said second TCP/IP stream communication from said second TCP/IP stream communication accepted from said other communication terminal of the communication source by using said communication unit,
transfers the obtained information related to said second TCP/IP stream communication to said inquiry unit, and
obtains the information about said second application corresponding to the information related to said second TCP/IP stream communication from said inquiry unit.

**14.** (Currently Amended) The communication system according to claim 12 or claim 13, wherein
said information related to said first TCP/IP stream communication includes an IP address and a port number of said communication terminal,
said information about said first application includes an identifier of said first application,
said information related to said second TCP/IP stream communication includes an IP address and a port number of said other communication terminal,
said information about said second application includes an identifier of said second application.

**15.** (Currently Amended) The communication system according to claim 14, wherein said identifier of said first application and the identifier of said second application are a process ID.

**16.** (Currently Amended) The communication system according to any one of claim 8 through claim 15, wherein at least one application operates on each said communication terminal of the communication source and the communication destination.

**17.** (Currently Amended) A communication method in a communication system having a communication terminal which communicates with other communication terminal through a network, wherein said communication terminal comprising:
a communication step of executing TCP/IP stream communication with said other communication terminal of a communication destination;
a communication sensing step of sensing connection of the TCP/IP stream communication at said communication step;
an information obtaining step of obtaining information related to the TCP/IP stream communicationsensed at said communication sensing step and information about an application of a communication source which is executing said TCP/IP stream communication; and
an information transmission step of transmitting, to said other communication terminal through a dedicated communication path whose safety is high other than a communication path used at said communication step, the information related to the TCP/IP stream communication and the information about the application of the communication source executing said TCP/IP steam communication which are obtained at said information obtaining step.

**18.** (Currently Amended) A communication method in a communication system having a communication terminal which communicates with other communication terminal through a network, wherein
said communication terminal comprising:
a first communication step of executing TCP/IP stream communication with said other communication terminal of a communication destination;
a communication sensing step of sensing connection of the TCP/IP stream communication at said first communication step;
an information obtaining step of obtaining the information related to the TCP/IP stream communication sensed at said communication sensing step and information about an application of a communication source which is executing said TCP/IP stream communication; and
an information transmission step of transmitting, to said other communication terminal through a dedicated communication path whose safety is high other than a communication path used at said first communication step, the information related to the TCP/IP stream communication and the information about the application of the communication source executing said TCP/IP stream communication which are obtained at said information obtaining step; wherein
said other communication terminal of the communication destination comprising:
a second communication step of accepting said TCP/IP stream communication from said communication terminal of the communication source to obtain the information related to said TCP/IP stream communication;
an information reception step of receiving; through said dedicated communication path, the information related to said TCP/IP stream communication and the information about the application of said communication source;
a recording step of recording, in a recording unit, the information related to said TCP/IP stream communication and the information about the application of said communication source which are received at said information reception step so as to be correlated with each other; and
an inquiry step of obtaining, from said recording unit, the information about the application of
said communication source corresponding to the
information related to said TCP/IP stream communication
which is obtained at said second communication step.

**19.** (Currently Amended) The communication method according to claim 17 or claim 18, wherein
said information related to said TCP/IP stream communication includes an IP address and a port number of said communication terminal, and
said information about the application of said communication source includes an identifier of the application of said communication source.

**20.** (Currently Amended) A communication method in a communication system having a communication terminal which communicates with other communication terminal through a network, wherein said communication terminal comprising:
a communication step of accepting said TCP/IP stream communication from said other communication terminal of a communication source to obtain information related to said TCP/IP stream communication;
an information reception step of receiving, through a dedicated communication path whose safety is high other than a communication path through which communication is executed at said communication step, information about an application of the communication source and the information related to said TCP/IP stream communication;
a recording step of recording, in a recording unit, the information related to said TCP/IP stream communication and the information about the application of said communication source which are received at said information reception step so as to be correlated with each other; and
an inquiry step of obtaining, from said recording unit, the information about the application of said communication source corresponding to the information related to said TCP/IP stream communication which is obtained at said communication step.

**21.** (Currently Amended) The communication method according to claim 20, wherein
said information related to said TCP/IP stream communication includes an IP address and a port number of said other communication terminal, and
said information about the application of said communication source includes an identifier of the application of said communication source.

**22.** (Currently Amended) A communication method of a terminal having a plurality of operating systems including a first operating system and a second operating system which communicate between the operating systems, wherein
said first operating system comprising:
a first communication step of executing TCP/IP stream communication with said second operating system;
a communication sensing step of sensing connection of the TCP/IP stream communication at said first communication step;
an information obtaining step of obtaining information related to the TCP/IP stream communication sensed at said communication sensing step and information about an application of a communication source executing said TCP/IP stream communication; and
an information transmission step of transmitting, to said second operating system through a dedicated system call whose safety is high other than a communication path used at said first communication step, the information related to the TCP/IP stream communication and the information about the application of the communication source executing said TCP/IP stream communication which are obtained at said information obtaining step; wherein
said second operating system comprising:
a second communication step of accepting said TCP/IP stream communication from said first operating system to obtain information related to said TCP/IP stream communication;
an information reception step of receiving, through said dedicated system call whose safety is high, the information related to said TCP/IP stream communication and the information about the application of said communication source;
a recording step of recording, in a recording unit, the information related to said TCP/IP stream communication and the information about the application of said communication source which are received at said information reception step so as to be correlated with each other; and
an inquiry step of obtaining, from said recording unit, the information about the application of said communication source corresponding to the information related to said TCP/IP stream communication which is received at said communication step.

**23.** (Currently Amended) The communication method according to claim 22, wherein
said information related to said TCP/IP stream communication includes an IP address and a port number of said first operating system of the communication source, and
said information about the application of said communication source includes an identifier of the application of said communication source.

**24.** (Currently Amended) The communication method according to any one of claims 19, 21 and 23, wherein said identifier of the application of said communication source is a process ID of the application of said communication source.

**25.** (Currently Amended) A program run on a communication terminal which communicates with other communication terminal through a network, which program causes said communication terminal to execute
a communication processing of executing TCP/IP stream communication with said other communication terminal of a communication destination,
a communication sensing processing of sensing connection of the TCP/IP stream communication in said communication processing,
an information obtaining processing of obtaining information related to the TCP/IP stream communication sensed in said communication sensing processing and information about an application of a communication source which is executing said TCP/IP stream communication, and
an information transmission processing of transmitting, to said other communication terminal through a dedicated communication path whose safety is high other than a communication path used in said communication processing, the information related to the TCP/IP stream communication and the information about the application of the communication source executing said TCP/IP steam communication which are obtained in said information obtaining processing.

**26.** (Currently Amended) A program run on a communication terminal which communicates with other communication terminal through a network, which program causes
said communication terminal to execute
a first communication processing of executing TCP/IP stream communication with said other communication terminal of a communication destination,
a communication sensing processing of sensing connection of the TCP/IP stream communication in said first communication processing,
an information obtaining processing of obtaining the information related to the TCP/IP stream communication sensed in said communication sensing processing and information about an application of a communication source which is executing said TCP/IP stream communication, and
an information transmission processing of transmitting, to said other communication terminal through a dedicated communication path whose safety is high other than a communication path used in said first communication processing, the information related to the TCP/IP stream communication and the information about the application of the communication source executing said TCP/IP stream communication which are obtained in said information obtaining processing, and
said other communication terminal of the communication destination to execute
a second communication processing of accepting said TCP/IP stream communication from said communication terminal of the communication source to obtain the information related to said TCP/IP stream communication,
an information reception processing of receiving, through said dedicated communication path, the information related to said TCP/IP stream communication and the information about the application of said communication source,
a recording processing of recording, in a recording unit, the information related to said TCP/IP stream communication and the information about the application of said communication source which are received in said information reception processing so as to be correlated with each other, and
an inquiry processing of obtaining, from said recording unit, the information about the application of said communication source corresponding to the information related to said TCP/IP stream communication which is received in said second communication processing.

**27.** (Currently Amended) The program according to claim 25 or claim 26, wherein
said information related to said TCP/IP stream communication includes an IP address and a port number of said communication terminal, and
said information about the application of said communication source includes an identifier of the application of said communication source.

**28.** (Currently Amended) A program run on a communication terminal which communicates with other communication terminal through a network, which program causes said communication terminal to execute
a communication processing of accepting said TCP/IP stream communication from said other communication terminal of a communication source to obtain information related to said TCP/IP stream communication,
an information reception processing of receiving, through a dedicated communication path whose safety is high other than a communication path through which communication is executed in said communication processing, the information related to said TCP/IP stream communication and information about an application of the communication source,
a recording processing of recording, in a recording unit, the information related to said TCP/IP stream communication and the information about the application of said communication source which are received in said information reception processing so as to be correlated with each other, and
an inquiry processing of obtaining, from said recording unit, the information about the application of said communication source corresponding to the information related to said TCP/IP stream communication which is received in said communication processing.

**29.** Currently Amended) The program according to claim 28, wherein
said information related to said TCP/IP stream communication includes an IP address and a port number of said other communication terminal, and
said information about the application of said communication source includes an identifier of the application of said communication source.

**30.** (Currently Amended) A program run on aterminal having a plurality of operating systems including a first operating system and a second operating system that communicate between the operating systems, which causes
said first operating system to execute
a first communication processing of executing TCP/IP stream communication with said second operating system,
a communication sensing processing of sensing connection of the TCP/IP stream communication in said first communication processing,
an information obtaining processing of obtaining information related to the TCP/IP stream communication sensed in said communication sensing processing and information about an application of a communication source executing said TCP/IP stream communication, and
an information transmission processing of transmitting, to said second operating system through a dedicated system call whose safety is high other than a communication path used in said first communication processing, the information related to the TCP/IP stream communication and the information about the application of the communication source executing said TCP/IP stream communication which are obtained in said information obtaining processing, and
said second operating system to execute
a second communication processing of accepting said TCP/IP stream communication from said first operating system to obtain information related to said TCP/IP stream communication,
an information reception processing of receiving, through said dedicated system call whose safety is high, the information related to said TCP/IP stream communication and the information about the application of said communication source,
a recording processing of recording, in a recording unit, the information related to said TCP/IP stream communication and the information about the application of said communication source which are received in said information reception processing so as to be correlated with each other, and
an inquiry processing of obtaining, from said recording unit, the information about the application of said communication source corresponding to the information related to said TCP/IP stream communication which is received in said second communication processing.

**31.** (Currently Amended) The program according to claim 30, wherein
said information related to said TCP/IP stream communication includes an IP address and a port number of said first operating system of the communication source, and
said information about the application of said communication source includes an identifier of the application of said communication source.

**32.** (Currently Amended) The program according to any one of claims 27, 29 and 31, wherein saidi dentifier of the application of said communication source is a process ID of the application of said communication source.

**33.** Cancelled)

**34.** (Cancelled)

**35.** (Cancelled)

**36.** (Cancelled)

**37.** (Cancelled)

**38.** (Cancelled)

**39.** (Cancelled)

**40.** (Cancelled)

**41.** (Cancelled)
